# EUROPEAN PATENT SPECIFICATION

(11) **EP 1 907 902 B1**
(45) Date of publication and mention of the grant of the patent: **29.02.2012**
(21) Application number: 06764468.2
(22) Date of filing: 05.07.2006
(51) Int. Cl.: G03F 7/00, B41M 5/165, B41M 5/28, H01B 1/12, H01B 1/20

(54) **A METHOD OF BUILDING A SENSOR STRUCTURE**
VERFAHREN ZUM AUFBAU EINER SENSORSTRUKTUR
PROCEDE DE CONSTRUCTION D'UNE STRUCTURE DE DETECTION

(30) Priority: 07.07.2005 FI 20050731
(43) Date of publication of application: 09.04.2008
(73) Proprietor: M-Real Oyj, 02100 Espoo (FI)
(72) Inventor: MUSTONEN, Tuomas, FI-02200 Espoo (FI)
(74) Representative: Arvela, Sakari Mikael
(86) International application number: PCT/FI2006/000242
(87) International publication number: WO 2007/006844

(56) References cited:
- EP-A1- 0 252 410
- WO-A-2004/088037
- WO-A-2004/088039
- WO-A-2005/021597

## Description

The present invention relates to a sensor structure according to Claim 1.

The present invention also relates to the manufacturing method and the use of the sensor structure.

At the production or further processing stages, paper and cardboard products, among others, can have added thereto what is known as security symbols, which comprise an electrically conductive polymer, its electrical conductivity being locally changeable so that, deviating from the properties of the surrounding material, it is electrically conductive or, correspondingly, electrically non-conductive in order to form a desired security symbol patterning or pattern. Thus, the authenticity of the product can be confirmed by identifying the electrical conductivity of the paper or cardboard product on the region of the security symbol.

One special property of the electrically conductive polymers is the dependence of the conductivity on the pH. For example, when the pH is in the acidic range, polyaniline is electrically conductive. When changing the pH into basic, the polymer becomes electrically non-conductive. By utilizing the dependence of the conductivity on the pH, various applications can be provided to form conductive patterns in a controlled way. One simple way is to imprint a desired patterning, such as the logo of a company, onto a polymer layer, which is in its non-conductive form, using an acidic substance. When acidic, the patterning is electrically conductive. Correspondingly, the desired non-conductive patterning can also be made by imprinting it onto a polymer layer, which is in its conductive form, using a basic substance. The patterning can be identified from its surroundings by means of galvanic, capacity or inductive couplings; in this way, it serves as a guarantee of authenticity for a product or for example a document. It is easy to modify the acidic or basic patterning that is to be imprinted, whereby it is possible to make personified patterning.

Part of the markings made on paper products is based on the use of microcapsules. In the paper industry, microcapsules have typically been used to manufacture photographic paper, thermosensitive listing paper, self-copying paper and security paper. Generally, the operating principle of the capsules is that, when the microcapsules are ruptured, the substance contained in them causes a change in colour when reacting with another chemical contained in the paper or with the environment at that spot on the paper. Thus, the reaction typically requires two components. The capsules can contain a colouring agent or a chemical, one of the components being either placed on the paper or in some other environment, such as in the printing ink. The capsules can rupture under the action of mechanical pressure, heat, light, another radiation, chemical interaction or a combination thereof. The microcapsules can also be added to the paper during the printing stage. Samples of perfumes or foodstuff aromas or security elements can also be printed on the paper and cardboard products.

US publication 6 440 898 presents the use of microcapsules in paper to implement both thermo-sensitive printing and a pressure-sensitive security feature.

European patent specification 0693383, in turn, suggests that a layer containing microcapsules be printed on the surface of documents, e.g., on the region of important figures, in connection with printing. If someone tries to change the figures after printing, the microcapsules rupture and release a colouring agent that cannot be deleted.

The invention described in US patent specification 5 225 299 is an example of a material, in which microcapsules having a photosensitive coat are employed. When exposed to light, the strength of the coat changes according to the exposure by means of the mechanism of photopolymerization. The capsules contain a reagent, which forms a dye when reacting with a developer outside the capsules, when weaker capsules rupture under pressure.

One known release mechanism of the contents of the microcapsule is the mechanical rupture of the capsules. For example, carbonless copy paper uses this release mechanism (Trozenski R.M., New poly-urea capsules for carbonless copy paper, *TAPPI99 Proceedings,* 89). In this application, the wall of the capsule is usually made of polyurea, polyamide, gelatine or urea and melamine-formaldehyde. The core comprises a liquid dye, a dye precursor or the like.

Electrically conductive polymers, such as polyaniline, polypyrrole and polythiophene in their basic forms are non-conductive and they are rendered conductive by doping, e.g., by means of a suitable acid. Correspondingly, the conductive form can be rendered non-conductive by dedoping. This is carried out in published application FI 20030491, which describes the manufacture of a multilayer paper or cardboard product that has a layer containing electrically conductive polymers. In the publication, the layer containing electrically conductive polymers is doped to change the electrical conductivity.

In the invention of US patent publication 5 061 657, the conductors that connect an integrated circuit with a circuit board are formed so that the area in question is coated with a polymer in its non-conductive form and the conductors are made by chemical or physical doping of the polymer layer at the spots where the conductors are to be formed.

US patent 5 091 122 presents a method of preparing microcapsules that contain a basic solution. The publication mentions the use of a polymer, which is hydrophobic at high pH values, to make the coat material.

European patent 0252410 presents a method, according to which an electrically non-conductive underlayer, such as paper or polyethene, is coated with a layer comprising a mixture of two kinds of microcapsules, of which a proportion contains pyrroles and another proportion contains an oxidizing agent, i.e. a doping agent, in addition to which the capsules may contain salt. When the capsules rupture under pressure, their contents react with one another and are polymerized, developing a layer of conductive polymer, polypyrrole, at that spot.

WO 2005/021597 discloses a method for forming conductive patterns on a substrate using one or more photopatternable layers comprising a conductive polymer and microcapsules containing either conductivity enhancing or conductivity degrading agents.

Polycarbonates, such as polyethylene and polypropylene carbonates, can be used as thermally decomposable and sacrificial materials in the fabrication of microchannels, as is the case in the publication of Reed et al (Reed H.A., White C.E., Rao V., Bidstrup Allen S.A., Henderson C.L., Kohl P.A., Fabrication of microchannels using polycarbonates as sacrificial materials, J. Micromech. Microeng., 11, 2001, 733). The system is heated, whereby the polycarbonate decomposes and a cavity remains. The method requires that the disintegration products be able to penetrate the layer of coat. The height of the microchannels is about 5µm and the width varies from 25 to 140µm depending on the coating material of the capsules, among other things.

Alkaline substances have been used in paper and cardboard products to add security symbols directly on the products. However, a security pattern implemented by this method often remains slightly indistinct.

Identification (ID) solutions, or what are known as RFID tags, which are produced by means of conductive polymers and which are readable at the radio frequency (RF), have been developed in the field of smart products, among others. It has been recognized that one obstacle in the way of the RFID technology becoming common is the invasion of consumer privacy, because the tags often continue their functioning at the homes of the consumers.

Being often transported for long distances before becoming available to the consumers, the intactness and the freshness of products in the transport chain are increasingly important to the consumers at present. Regarding foodstuffs, it is particularly important that the products have not been kept or transported at temperatures higher than permitted.

There are various temperature sensor solutions, which can be used to control the transport chain of products. These can be divided into two classes, chemical and electronic. Generally, the only thing the chemical sensors are capable of doing is to report, whether or not a set temperature limit has been exceeded. The result can be read visually on the sensor. Such sensor solutions are manufactured, for example, by 3M (MonitorMark^{™}) and Vitsab (Check Point®). Typically, the electronic sensors can be read visually by means of a visual display unit or a cordless measuring device and the sensor is generally capable of controlling momentary temperatures and entering them in its memory. Electronic temperature sensors are manufactured, for example, by Sensitech (TagAlert^{™}) and KSW-Microtec (TempSense).

However, the price is a problem for both solutions, i.e., they are suited to control special products only, and thus no good for consumer products. The sensors are often added to a product in a form of a sticker, which can possibly be detached or replaced by a new one; thus, they are not reliable enough. The separate stickers also cost more than solutions, which are directly integrated into the product or its package.

The visual identification frequently used in chemical sensors is not very suitable for consumer products, as in that case, the consumers would choose nothing but the freshest products of the shop, causing considerable costs to the shopkeepers. An advantageous method of reading would be a cordless reading by means of a simple scanner, which the shopkeepers could use in the quality-control of the products they sell or receive. Consequently, there is a demand for advantageous sensor solutions, which would enable large-scale quality control of consumer products regarding too high storage temperatures, for example.

The purpose of the present invention is to solve at least some of the problems related to the known technology. To be more precise, the object of the present invention is to provide structures and methods, which can be used to make markings for different uses, or sensors, which are easy to verify when being activated or when activating.

The present invention is based on the use of microcapsules. The microcapsules are filled with an acidic or alkaline substance, which, when coming into contact with an electrically conductive polymer, changes the electrical conductivity of the polymer. The microcapsules that are filled with the acidic or alkaline substance can be used as activating or deactivating elements, for example, is smart packages implemented using conductive polymers.

As the acidic or alkaline substance, which changes the electrical conductivity of the polymer, is not printed as such on top of the polymer layer, but is instead added inside the microcapsules, the electrical conductivity of the polymer can be changed at an exact moment in time by rupturing the capsules.

The present invention provides a new method of marking the products. The invention further provides a new method for controlling the state of the products regarding, e.g., mechanical or thermal stresses, and a method of manufacturing irreversible mechanical connectors, the state of which is electrically identifiable.

The method according to the invention uses small microcapsules with a diameter of about 4µm (the mean value) or bigger microcapsules with a diameter of about 50 to 500µm, which can be filled with an acid or a base or an acidic or basic dye, or a precursor of a dye. The capsules can be ruptured using a mechanical strength, light, laser, some other radiation or heat.

The sensor structure according to the invention comprises
- at least a first layer, which has a synthetic, electrically conductive polymer optionally mixed with a binder that forms a binding agent matrix, and
- at least a second layer, which is separate and next to the first layer, or at a distance therefrom, or at least partly combined with the first layer,
whereby the second layer comprises microcapsules containing either the acidic substance selected from sulphonic acids or basic substance selected from sodium hydroxide, potassium hydroxide and sodium carbonate optionally mixed with the binder, the acidic or basic substance, when released from the microcapsules, changing the electrical conductivity of the polymer.

The sensor structure is manufactured and added to a product or onto a product by
- enclosing the basic or acidic substances in the microcapsules,
- adding the microcapsules to the product optionally in a mixture with the binder at the production, further processing or refining stages of the product, the product also containing an electrically conductive polymer that is optionally mixed with the binder, and
- rupturing the capsules at a desired time, or allowing them to rupture on their own accord in the course of time.

The method according to the invention is used to manufacture products that contain an electrically conductive polymer and microcapsules that contain a base or an acid either in one and the same layer or in independent layers. The products may be, for example, various sensor structures or paper or cardboard products. According to the method, the electrical conductivity of the polymer is changed by doping the electrically non-conductive polymer by adding onto the product or to the product microcapsules that contain an acid solution, the microcapsules being then ruptured, or by dedoping the electrically conductive polymer by adding onto the product or to the product microcapsules that contain an alkali solution, the microcapsules being then ruptured. By using active substances suitable for the purpose, such as acidic or basic dyes or precursors of dyes, it is also possible to obtain a colour reaction at the same time. A colour reaction is also obtained, when the polymer changes its state of conductivity; for example, polyaniline in its conductive form is green and in its non-conductive form blue.

One advantage of the present method is that markings or sensors are provided for different purposes, which, when activating or being activated, can easily be verified, for example, by means of electrical or optical measuring.

The other details and advantages of the invention become evident from the following detailed description.
Fig. 1 is a cross section that illustrates the possible embodiments of the method according to the present invention.
Fig. 2 is a graph in principle of possible sensor solutions that are constructed from a combination of polyaniline and microcapsules.
Fig. 3 is a graph in principle of possible sensor solutions and the patterns of electrically conductive polymers, which are produced to study the change in the electrical conductivity of the microcapsules.

The following components are included if the figures:

| | |
|---|---|
| 1 | Product material |
| 2 | Microcapsules |
| 3 | Electrically conductive polymer |
| 4 | Electrically conductive polymer in its electrically non-conductive form |
| 5 | Electrically conductive polymer and the microcapsules in the same layer |
| 6 | Measuring point |
| 7-11 | Lines of varying widths, which are formed from the electrically conductive polymer that is in its conductive form |

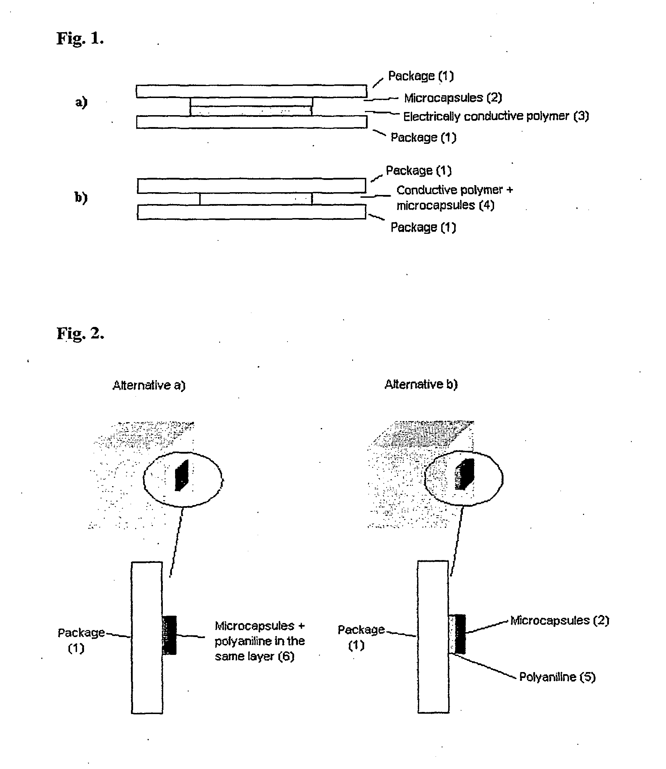

Fig. 1 shows, how the microcapsules 2 can be added to a product 1 either in a different layer than the electrically conductive polymer 3, as in Alternative a), or the microcapsules and the electrically conductive polymer can be mixed in the same layer 5 at the manufacturing stage of the product to form one integral layer, which is then added to the product, as in Alternative b).

Fig. 2 shows examples of the principles of manufacture of possible sensor solutions. Similarly to Fig. 1, the microcapsules 2 can be in different layers than the polymer 3 (Alternative b) or they can be mixed together and placed in the same layer 5 (Alternative a).

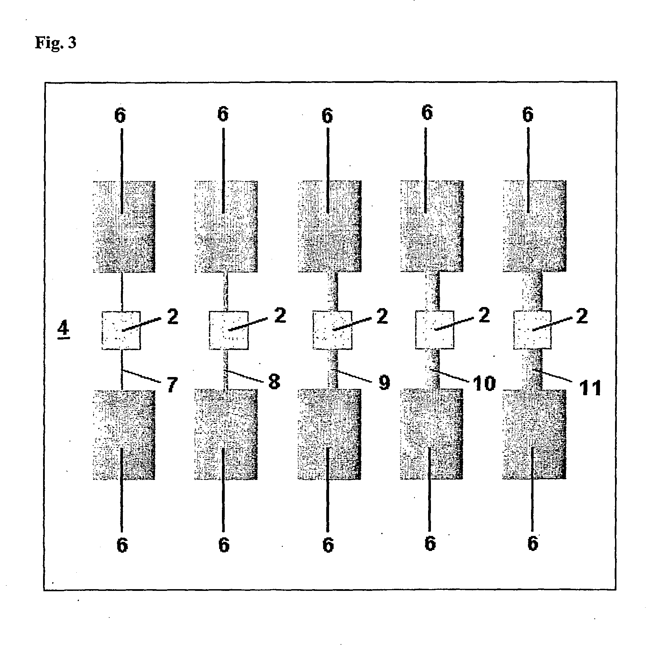

Fig. 3 shows the (dedoped) conductive polymer 4 in its non-conductive form. On top of it, there is a thin line (7 to 11) of polymer in its conductive form, connecting the measuring points 6 made of the conducting polymer in its conductive form. A layer of microcapsules 2 has been added on top of the lines (7 to 11).

Micro bubbles can be defined as small, unstable balls filled with gas and contained in a solution. A micro bubble is kept together by a thin liquid wall, known as a film. The microcapsules, in turn, are stabilized micro bubbles. They are particles with a mean diameter of about 1 to 1000µm, consisting of one or more cores and a generally solid capsule wall. The core can be gas, liquid or solid matter and the wall can be natural material or synthetic material. The shape of the capsules can be more or less round and their surface can be smooth or wrinkly depending on the material used or the method of manufacture. Depending on the purpose of use, the wall can be permeable, partly permeable or impermeable.

Micro bubbles and microcapsules have mainly been manufactured of starch or other natural or synthetic polymers either by drying a material that has been made swell in liquid or by using emulsion techniques. At their best, both methods have provided micro bubbles/microcapsules with the smallest diameter of less than 5µm. When using starch, the smallest capsules are obtained, when the starch is allowed to swell in water at a temperature lower than the gelatinization temperature.

The life period of the micro bubble is mainly shortened by surface tension forces, which increase the pressure of the gas inside the bubble. The bubbles can be stabilized by different methods, of which the most common is cross-linking by surfactants, whereby the surface tension decreases. As a result, an often crusty microcapsule is provided, the crust consisting of an organic material.

"Sensor" in the present invention refers to a structure, which is activated by a change in the conditions and, when activating, causes a verifiable change in the structure.

The electrically conductive polymer can be bound to the product both in an electrically conductive and an electrically non-conductive form. Therefore, the term "electrically conductive polymer" also refers to a polymer that is non-conductive at the moment of examination, which, however, can be brought into an electrically conductive form by a suitable doping agent treatment, for example.

The "doping agent" in the present invention refers to an acidic substance, which reacts with the polymer in its non-conductive form, doping the same (e.g., by doping or some other treatment) to form charge carriers (such as free electrons) in the polymer. Typical doping agents include organic sulphonic acids and inorganic mineral acids. Correspondingly, the "dedoping agent" in the present invention refers to an agent, which is capable of reacting with the acid group of the protonic acid used as a dopant by reducing it. Typically, such substances comprise substances, such as NaOH, KOH and ammonia, which function as bases in an aqueous solution.

According to a preferred embodiment of the invention, the electrical conductivity of the polymer is changed by doping the electrically non-conductive polymer by adding to the product microcapsules containing a sulphonic acid, the microcapsules being then ruptured.

According to another preferred embodiment of the invention, the electrical conductivity of the polymer is changed by dedoping the electrically conductive polymer by adding to the product microcapsules containing NaOH, KOH or sodium carbonate, the microcapsules being then ruptured.

In both embodiments mentioned above, the activation or deactivation, i.e., doping or dedoping, is obtained by rupturing the coat of the microcapsules and then releasing their contents. This can preferably be carried out by using a mechanical force. For example, lines or patterns can be drawn on the product with a pen, whereby a security symbol can be made on the product, being visible upon examining the electrical conductivity of the product. The method of this preferred embodiment, which uses a pen to rupture the microcapsules in the product, is used to obtain a more accurate patterning than what is possible by the conventional printing techniques.

In addition to the mechanical force, the microcapsules can preferably be ruptured by using heat treatment or radiation. The above-mentioned patterning in the product can thus also be provided by means of a laser or the like. Other possible rupturing methods of microcapsules include the temperature range, mechanical, chemical, biodegradation, sensitivity to salt, pressure sensitivity, radiation, photochemical, the pH range or dissolution in solutions.

The microcapsules can also preferably be made so that they slowly rupture of their own accord, slowly dissolve or slowly release their contents, whereby the conductivity of the polymer would slowly change in the course of time. In that way, the microcapsule structure could also work as a timer or an element, which in some other way showed the time. Generally, microcapsules of a larger size degrade faster than those of a smaller size.

In the encapsulation, it is possible to change the diameter of the capsule, the thickness of the wall, the material of the capsule's coat, and the composition of its contents. For example, by changing the thickness of the capsule's wall, it is possible to adjust the sensitivity of the capsule to rupture and, thus, the switching limit of the sensor structure, which can be a force, temperature, or the unit of another rupturing method.

The coat materials can comprise, among others, proteins, polysaccharides, starches, waxes, fats, natural or synthetic polymers and resins. One preferred coat material is melamine formaldehyde. The coat material is selected so that it can be ruptured, for example, by using a mechanical force, radiation or heat, or more than one of these. The capsules can be ruptured by means of the mechanical force, light, laser, some other radiation or heat. For example, the mechanical force can be provided by a pen that is used to write on a paper or another product. The mechanical force can also be provided by opening the package, for example. One alternative would be to form capsules, which in the course of time would perish and break or the material used in their coat would dissolve.

The size, or the diameter of the microcapsules can vary within a range of 100nm to 6mm according to the contents, among others, and the amount of contents in relation to the total composition (the filling ratio) of the microcapsule may vary from 20% to 95%. The present invention uses microcapsules having a high filling ratio, preferably about 50 to 95%, more preferably about 80 to 95%.

The diameters of the capsules used can be about 1 to 10µm, preferably about 1 - 5µm. The layer formed by the microcapsules in the product has a thickness of about 1 µm - 1mm, preferably about 1 - 10µm according to the diameter of the microcapsules used. The thickness of the layer formed by the microcapsules in the product is always at least as large as the diameter of the microcapsules used. Thus, the thinnest layers of capsules (1 to 10µm) can only be obtained by the said microcapsules having a diameter not higher than 10µm. For the method according to the present invention, microcapsules of a larger size can also be used, having a diameter of as large as 500µm.

The microcapsules according to the present invention can be produced by various methods. The coat material of the capsule walls can consist of both a hydrophilic and a lipophilic substance, such as protein, hydrocolloid, rubber, wax, and resin or formaldehyde urea polymer. However, the material should endure (basic or acidic) aqueous contents.

The manufacturing methods of the microcapsules can be divided into mechanical and chemical methods. The mechanical methods include, among others, spray drying, spray cooling, rotary disc grinding, fluidized bed coating, stationary nozzle coextrusion, centrifugal head coextrusion, submerged nozzle coextrusion, and pan coating. The chemical methods include, among others, phase separation, solvent evaporation, solvent extraction, interfacial polymerization, simple and complex coacervation, in situ polymerization, liposome technology, and nanoencapsulation methods.

Various encapsulation techniques can be used to provide microcapsules of different size categories. Table 1 presents assessments of size categories obtained by the conventional methods.

**Table 1. Examples of generally used encapsulation methods and the sizes of the microcapsules obtained by using the same**

| **Encapsulation technique** | **Size category (µm)** |
|---|---|
| **Physical methods** | |
| Stationary coextrusion | 1000 - 6000 |
| Centrifugal coextrusion | 125 - 3000 |
| Submerged nozzle coextrusion | 700 - 8000 |
| Oscillating nozzle | > 150 |
| Rotary disc | 5-1000 |
| Pan coating | > 500 |
| Fluidized bed | 50-10000 |
| Spray drying | 20-150 |

| **Chemical methods** | |
|---|---|
| Simple/complex coacervation | 1 - 500 |
| Phase separation | 1 - 500 |
| Interfacial polymerization | 1 - 500 |
| Solvent evaporation | 1 - 500 |
| In situ polymerization | 1 - 500 |
| Liposome | 0.1 - 1 |
| Sol-gel methods | 0.1 - 1 |
| Nanoencapsulation | < 1 |

The above-mentioned encapsulation techniques can be used to encapsulate solutions, gases, and suspensions, among others.

In the complex coacervation, the substance to be encapsulated is dispersed as droplets in an aqueous polymer solution, such as gelatine. Another water-soluble polymer, such as Arabic gum, is then added to the emulsion. After mixing, the pH is adjusted by means of a diluted acetic acid. After adding the acid, two phases are formed, one of which, called coacervate, has high contents of both polymers, and the other one, known as a supernatant, has low contents of polymer. If the materials are correctly selected, the coacervate is adsorbed on the surface of the dispersed core drops, thus forming microcapsules. Generally, the capsules are first hardened by cooling and then by means of a chemical reaction by adding a cross-linking substance, such as formaldehyde.

In the coextrusion, both the liquid core material and the capsule material are pumped through coaxial openings, the core material flowing in the middle opening and the capsule material flowing through the outer ring. In this way, a combination drop is formed, consisting of a drop of the core liquid, which is encapsulated in a layer of the capsule solution. The capsule is then hardened by conventional methods, such as chemical cross-linking, e.g., in the case of polymers, cooling, e.g., in the case of fats or waxes, or by solvent evaporation.

The capsules are formed in two modes, in a drop or jet mode, according to the flow rates of the core and capsule solutions. In the drop mode, the flows of both solutions are slow and a combination drop begins to form at the tip of the nozzle. The surface tension prevents the drop from falling away immediately. Instead, the drop will not fall away from the tip of the nozzle until the drop is large enough for the separating force caused by its weight to exceed the retentivity caused by the surface tension. This mode can be used to achieve capsules of a uniform size, even large ones. If the flow rates are increased enough, no more capsules are formed at the tip of the nozzle but a combination jet is formed, consisting of both the core and the capsule solutions. By the force of the surface tension, the combination jet is soon dispersed into combination drops.

According to a preferred embodiment of the invention, the microcapsules are prepared by spinning two different substances. After obtaining drops of a certain size, the spraying technique is used to superimpose two bubbles, of which the outer one is hardened.

In the preparation of the products according to the invention, for example, polyaniline, polypyrrole, polyacetylene, polyparaphenylene or polythiophene or their derivatives or mixtures can be used as the electrically conductive polymer. Regarding the derivatives, the alkyl and aryl derivatives and the chlorine- and bromine-substituted derivatives of the above-mentioned polymers can be mentioned in particular. When necessary, other electrically conductive particles, such as metal, graphite or carbon black can also be used as additives. Conjugated double bonds of the backbone chain are common to all electrically conductive polymers, enabling the movement of the charge carriers (such as electrons). The electrically conductive polymers can have both ionic and electronic conductivity, and this conductivity may vary within the whole conductivity range, from the insulant to the metallic conductor. Generally, a polymer is considered electrically conductive, if is resistivity is not higher than 10¹¹ ohm (as surface resistivity).

In the invention, polyaniline is quite preferable to be used as the electrically conductive polymer. The monomer in the polyaniline is aniline or its derivative, its nitrogen atom being mainly bonded to the carbon of the para position of the benzene ring of the next unit. The non-substituted polyaniline may occur in various forms, of which the so called emeraldine form is generally used for the applications of conductive polymers, being typical of its bright emerald green colour, which stands for its name. By means of doping, the electrically neutral polyaniline can be converted into a conductive polyaniline complex.

The microcapsules can be added to the product either in the same layer as the electrically conductive polymer or they can be added to the product in different layers. If the microcapsules and the electrically conductive polymer are added to the product in different layers, the addition of the microcapsules can also be carried out at a later stage than that of the electrically conductive polymer. In that case, the layer of microcapsules and the polymer layer are kept separate at least during the production stage, and they are not brought tightly together until at a further processing or refining stage or at a subsequent stage so that a reaction can be generated.

A binder should also be used in the layer of microcapsules, attaching the microcapsule to the product. If the microcapsules are situated in the same layer as the conducting polymer, the conducting polymer as such can work as the binder. However, a separate binder is often needed, which can be the same as or another than that of the conductive polymer. Suitable binders include, for example, starch-based binders, dextrines, carboxymethyl cellulose or polymer-based binders, such as polyvinyl alcohol and polyvinyl acetate. However, a bulking agent can also be used in the layer of microcapsules, when needed, to protect the capsules against premature rupturing, e.g., during transportation.

If the microcapsules are added to the product in a separate layer from the electrically conductive polymer, especially, if the microcapsules are added to the product at a different stage than the polymer in question, a binding material can be used, if needed, to keep the layer of microcapsules in place. Suitable materials for this purpose include stickers, tapes or other films or corresponding materials, which have an adhesive provided on the surface thereof.

The product according to the invention thus includes at least one "first layer", which comprises at least an electrically conductive polymer that is mixed with a binder constituting a matrix. This layer, which is possibly the only one, is either continuous or discontinuous. If there is only one layer in the product, this layer comprises the microcapsules as well. The microcapsules can also be in a different layer than the polymer. The microcapsules in the "second layer" can also possibly be mixed with a binder, which can be the same as or different from the binder in the first layer. The "matrix" refers to a polymer network or layer, which is at least partly continuous so that it is capable of forming uniform surfaces and layers. Due to the electrically conductive polymer, the first layer is at least partly electrically conductive or it can be rendered electrically conductive. Typically, the surface resistivity of the first layer in its electrically conductive form is about 10² to 10¹¹ ohm, preferably about 10³ to 10¹⁰ ohm, particularly about 10⁴ to 10⁹ ohm.

In addition to the above, the multilayer products can have an intermediate layer between the first and second layers, enhancing the mutual adhesion of the layers. Such a "tie layer" may consist of a binder that is the same as or different from that in the first or second layers. The layer can also comprise a thermoplast.

In addition to the previous layers, the multilayer product typically comprises an additional layer, which is fitted on top of the first or the second layer. Such an additional layer may consist of a plastic film - e.g., a polyolefin film - which is extruded on the surface of the product. Alternatively, the additional layer can comprise a coating layer that is applied on top of the surface layer. The additional layer thus forms the surface layer of the product or gives the product properties of barrier or sealability. Consequently, the product can be attached to a plastic underlaying by means of the additional layer, for example.

In addition to the preceding alternatives, the lamellar structure according to the invention can be freely modified according to the intended use. Various barrier layers, such as layers of polyester and EVAL, and aluminium films, can be incorporated into the structure.

Generally, the structure has 1 to 10 layers, particularly 2 to 5 layers, whereby it is essential that at least one of the layers is a conductive polymer layer (i.e., the "first layer"), preferably so that its conductivity can be determined through the layers on top of it.

The amount of binder used in the different layers can vary within a broad range but, typically, it is about 0.1 to 10g/m², preferably about 0.5 to 5g/m², more preferably about 1 to 3.5g/m². The binder used is a binder that is soluble or dispersible in water, comprising, for example, dextrine, carboxymethyl cellulose, polyvinyl alcohol, polyvinyl acetate or a binder based on starch or a starch derivative.

The binder is used in a form that allows it to be spread at room temperature or at a slightly elevated temperature, typically about 10 to 50°C. Generally, such a binder mixture comprises a binder that is mixed with or dispersed in a medium, such as water or a solvent, preferably water. The dry content of the binder composition is about 1 to 80% by weight, preferably about 5 to 75% by weight, according to the binder. It is essential that the binder composition can be spread to form a layer.

The binder mixture can include one or more binder components. Regarding starch-based binders, for example, the mixture can have added thereto polyvinyl alcohol or ethylene/vinyl alcohol copolymer (in an amount of 0 to 35% by weight, a typical minimum amount being about 1% by weight); if so desired, a tacking resin (in an amount of 0 to 70% by weight, the typical minimum amount being about 1% by weight) or antioxidants (in an amount of 0 to 3% by weight, the typical minimum amount being about 0.1% by weight). It can also include anti-moulding agents and other biocides, typically about 0.1 to 3% by weight.

The electrically conductive polymer is mixed with the binder in the form of dispersion, for example. It is preferable to select a dispersant that corresponds to the solvent of the binder. Hence, polyaniline can be used as a water paste in case of aqueous binders. Its polyaniline content is, e.g., from 0.1 to 25% by weight, preferably from about 0.5 to 20% by weight, particularly from about 5 to 17% by weight. Polyaniline is most preferably in the conductive form, whereby the above-mentioned amount contains the amount of doping agent. Generally, the amount of polyaniline (without the doping agent) is from about 0.1 to 15% by weight. When added to non-aqueous adhesives, polyaniline is first dispersed in organic solvents (such as toluene). The amounts of use are the same as above.

According to the invention, a polymer binder mixture is provided, wherein the content of the electrically conductive polymer (with its doping agent) is about 10 to 90%, preferably about 30 to 70% of the weight of the mixture.

The binder jointly with the electrically conductive polymer forms a mixture, which generally is "homogeneous". In that case, the homogeneity of the mixture is examined visually as a film on top of a cardboard, wherein the mixture seems homogeneous. In practice, however, every mixture is a dispersion to some degree, also including tiny particles; therefore, the mixture is hardly ever perfectly homogeneous.

The mixture of the polymer and the binder can be applied with a roll, a rod, by spraying, atomizing or spreading. The mixture can also be fed from an adhesive nozzle as a continuous layer or film, enabling a non-contact application (the distance between the nozzle and the surface of the product can be about 1 to 50mm). The mixture can also be spread by typical printing methods, such as the offset, flexo, gravure, screen or inkjet printing methods.

The objective of the application is to make a layer of adhesive on the surface of a product (e.g., a cardboard package), the layer being at least partly continuous and adhering to the surface after spreading. If the electrically conductive polymer is in its electrically conductive form, it is preferable to spread it on an area that is acidic or slightly basic, at the most, in order for the electrical conductivity of the polymer to remain unchanged. The pH value of the area in this case is preferably not higher than 8.

The doping agents used in the present invention are sulphonic acids. More than one doping acid can be used, when so desired. When selecting the doping agent, the objective is to reach a state, wherein the affinity of the mutual bonding of the electrically conductive polymer and the product, to which the polymer is added, is as high as possible. The affinity is dependent on the material of the surface, to which the polymer is attached. As these materials can be different (both hydrophobic and hydrophilic), there is also a need for polymers that have very different functional groups (such as aliphatic or aromatic), and thus, ways of bonding.

A sulphonic acid, aromatic sulphonic acid in particular, is preferably used for doping, containing one aromatic ring or two fused rings, whereby at least one ring may have a polar or non-polar substituent, such as a functional group or a hydrocarbon chain.

Especially preferably acids include dodecyl benzene sulphonic acid (DBSA), camphor sulphonic acid, para toluene sulphonic acid and phenol sulphonic acid.

Too low pH values can have an adverse effect on the mechanical properties of the products manufactured by the method according to the invention, especially the fibres that constitute the framework of paper and cardboard products, which is why a preferable pH range in the "activated area", i.e., the area, to which the microcapsules have been added, is about 2 to 6, more preferably 2 to 4, in the products after the acidic microcapsules have ruptured.

Basic solutions work as possible dedoping agents for polyaniline or other polymers, the most common ones of them being sodium hydroxide, potassium hydroxide, and sodium carbonate solutions. Generally, both acids and bases are used as relatively diluted solutions (solutions of about 0.01 - 10 M), especially when treating paper or other fibrous products with them, in order for the fibre matrix under treatment not to become exceedingly fragile.

According to a preferred embodiment of the invention, the microcapsules cause a colour reaction when reacting with the polymer or another substance in the product. The precursor of the dye can either be incorporated into the product or it can be in the microcapsule as an acid or a base. Thus, identification can be provided on the product, being visible to the naked eye or verifiable by means of an optical visual aid. It should also be possible to combine the colour change reaction with the change in the electrical conductivity.

The present invention is based on the use of microcapsules, which preferably contain a filling agent consisting of a substance, preferably a liquid, which has either an acidic or basic pH. The filler of the microcapsules can also comprise a basic dye, such as the dye that reacts with the bentonite in paper, or a precursor of the dye. The basic liquid can be used to dedope the conductive polymer, among others, i.e. to change it into its non-conductive form. The capsules can be broken and dedoped, for example, by heat treatment, radiation, by mechanical, chemical or photochemical rupture, biodegradation, rupturing them by means of the sensitivity to salt or the pH range, the pressure sensitivity or radiation, or by dissolving in various solvents. The microcapsules can preferably also be prepared so that they slowly rupture themselves, slowly dissolve or slowly release their contents, whereby the conductivity of the polymer would slowly change in the course of time.

When the microcapsules break, their doping or dedoping effect does not cover a very wide area, but if a sufficiently large number of capsules are used, the dedoping or doping effects can be implemented on a macro scale. If the effect is not extensive, the change in the conductivity of the area can, however, be verified by using a capacitive measuring method.

A contact is not necessary for measuring the conductivity. Non-contact measuring can be carried out at a short distance, for example, by using capacitive measuring, as above. The possibility to carry out the non-contact measurement is preferable in the embodiment according to the invention, wherein the conductive polymer is not located in the outermost layer of the product. Other viable measuring methods include the galvanic and the inductive methods. On the other hand, the contacting measurement method has its advantages in certain cases, especially if the electrically conductive polymer is in the outermost layer of the product.

By varying the amount of electrically conductive polymer, a selected level of conductivity can be reached, for example, 10² - 10¹¹ ohm/square, preferably about 10⁴ -10⁸ ohm/square. When the square resistance is 10⁸ ohm or lower, it is easy to distinguish the product from a non-conductive product.

According to the invention, products can be provided, having an electrical conductivity that either remains for long periods of time or changes in the course of time.

The most significant advantages for using the microcapsules in the product to activate or deactivate the electrically conductive polymer located in the same product are:
- providing a novel package,
- providing security applications or sensors for different purposes, being easy to verify, when activating or being activated,
- obtaining a new method of verifying the value of the contents of the package,
- providing an electrical change,
- obtaining an easy and quantitative measuring method,
- advantageous materials can be used for the sensors,
- a simple sensor structure is provided, and
- the patterns of the security symbols can be made more accurate.

The products according to the present invention can be used, among others, in the manufacture of sensors, in antistatic applications, the storage of identification data, and security symbols.

According to the method of the present invention, the security applications can be used to make security symbols on packages and other products, whereby the authenticity of the product can be verified by making the capsules in the product rupture, whereby electrically conductive patterns are obtained. The security symbols could also be markings located in product packages, such as mobile phone packages, being activated by a finger pressure, for example, thus proving that the package has been opened; and cannot be reused after opening. This would prove to the customer that the product he/she has bought is new.

The rupture of the microcapsules' coat and the release of their contents can be carried out knowingly, to make the security patterns, for example, as described above. In addition, the sensitivity of the microcapsules to break could be utilized to manufacture sensor structures that indicate the transportation conditions of the product, for example, or it could be used to indicate any measures carried out on the product, e.g., the above-described opening of the package. Any measures observed or carried out can also be identified electrically, as the contents released by the microcapsules cause a change in the conductivity of the conductive polymer.

Identifying the undesirable opening of a package is a great challenge in connection with some expensive or otherwise significant products, such as consumer electronics and medicines. For example, the manufacturers of mobile phones and digital cameras want to make sure that, when a consumer buys their products, the package includes the original auxiliary instruments. In some market areas, such as Asia, for example, the packages of branded products are often opened and the original auxiliary instruments are replaced by false products. For example, fake batteries may explode and thus, in addition to economic losses, also cause health hazards.

For some medicines, there is the further problem of replacing the primary packages of the original drugs (known as blisters) with adulterated drugs inside the original secondary packages. Often, adulterated drugs do not have the same effect as the original ones, and this may even cause deaths. Therefore, it would be advisable to have some kind of a mechanism also for drug packages, identifying a possible opening of the package or a replacement of the drugs. At present, the most advanced solutions are so called "tamper-evident" seals that optically show whether or not the package has been opened. However, as the technique is fairly common and the optical identification is not completely reliable, these solutions do not give a complete protection against the attempts of forgers.

The structure according to the present invention can preferably be used to measure the conditions inside the product package or to measure the conditions outside the product package, or to measure both of them. The same product may contain microcapsules that break in different ways. For example, one product can contain microcapsules that are sensitive to both heat and moisture, whereby the sensor or another security application, to which these microcapsules have been added, can be activated by a change in both the temperature and the moisture. Theses ways of activation can also be made dependent on the time consumed.

By examining the conditions inside the package it is possible to see without opening the package, if for example the conditions surrounding a medicine in a drug package have remained within the required limits. Similarly, by examining the outer conditions of the drug package, it can be seen whether or not the package has been stored according to proper conditions.

According to the method of the present invention, by combining, in the sensors or detectors that occur in different products, the microcapsules that have basic or acidic contents and the electrically conductive polymer, it is possible to bring the sensor property of the sensor applications into the electrical form. The releasing methods of the contents comprise mechanical force, which is preferably provided by a pen, radiation, which is preferably provided by a laser, heat treatment, chemical degradation, biodegradation, sensitivity to salt, pressure sensitivity, photochemical degradation, sensitivity to the pH range, and dissolving in solvents. The microcapsules in the sensor can rupture when exposed to the substance indicated by the sensor. Thus, many types of sensor solutions can be made from the combination of polyaniline and microcapsules. Examples of the sensor applications include the opening indicator, rupture/pressure indicator, light detector and solvent sensor. There can be two different structural types of sensor constructions (see Fig. 2).

The sensor or the detector is activated by means of the substances released by the broken microcapsules. The activation either takes place by breaking the capsules at a desired point of time or by allowing them to break by themselves in the course of time.

The microcapsules can be added to the structure of the sensor in a different layer from the polymer, or mixed with the polymer according to Fig. 2.

In the previously mentioned RFID technique [identification (ID) readable on radio frequency (RF)], the method according to the present invention can also be used to change the RFID circuits, which are manufactured with conductive polymers or contain conductive polymers, into the non-conductive form by dedoping, using base-containing microcapsules, and thus make the RFID circuits inactive, i.e., reset them to zero to make them illegible.

Acidic or basic microcapsules can be used, among others, to form writable RFID circuits that are manufactured using conductive polymers. Thus, the capsules can be used to make new conductors or shut off old ones. The writable ID can be used, among others, to establish an individual identity for each package on the packaging line by utilizing various rupturing techniques of microcapsules, such as the laser.

The following unlimited example illustrates the invention.

### Example 1

According to Fig. 3, conductive layers of two different aqueous dispersions of a conductive polymer (polyaniline) were formed on two different types of cardboard sheets, patterns being made on the layers. The sheets were grades that had been coated twice with a mineral coating, their brand names being SimCote 270 g/m² and Avanta Prima 300 g/m². Rod coating was used as the coating method of the conductive polymer. Five patterns were formed on the conductive sheet by means of the dedoping method. A conductive polymer in its non-conductive form (dedoped) constitutes an area 4 and a polymer in its conductive form constitutes the patterns 6 to 11 in the area 4. In rod coating, a slotted rod No. 3 was used for both sheets, forming a wet coating film with an average thickness of 28 µm. The SimCote grade was coated with the dispersion of the conductive polymer, containing 3% of the aqueous dispersion of polyaniline and 11.7% of a polymeric binder, and the Avanta Ultra grade was coated with a dispersion of the conductive polymer, containing 4.8% of the aqueous dispersion of polyaniline and 8.6% of a polymeric binder. The total amounts of dry matter in the aqueous dispersions were 14.7% and 13.4%, respectively. The grammages of the thus formed coating layers were 4.1 g/m² (0.8 g/m² of polyaniline) and 3.8 g/m² (1.3 g/m² of polyaniline), respectively. 0.2 M sodium hydroxide (NaOH) was used for dedoping and patterning.

In the conductive patterns, parts 6 with sizes of 26 mm x 28 mm were used to measure the resistances between the points. The dual point measurement was used as the measuring method and the Wavetek Meterman 37XR multimeter was used as the meter, its measuring range being limited to 40 MΩ at the maximum. The measuring error of the meter is about ±2%. In practice, the measurements were read with an accuracy of two significant numbers, and the error was always rounded up to an accuracy of the smallest significant number. The measuring sensors used are round and their diameter is 17mm. The measuring points 6 are connected by a fairly thin line 7 to 11, which is polymer in its conductive form. The widths of the lines were 1mm (7), 2mm (8), 4mm (9), 6mm (10) and 8mm (11). The length of the line in every pattern is 36mm. The patterns were measured for resistances by means of the dual point measurement before spreading the microcapsules (see Table 2). The marking "Max" means that the measured resistance higher than the operating range of the meter. Sample 1 was too weakly conductive; therefore, the sample was not used in the following stages. Otherwise, the measured resistances behaved logically regarding both the different widths of the line and the thicknesses of the polymer layers.

An area of about 10mm x 10mm was added on top of the lines 7 to 11, consisting of microcapsules 2 in a sufficiently thick layer. The microcapsules were attached to the underlaying by means of a separate polymer film that had a layer of adhesive on its surface. The coat of the microcapsules was paraffin wax and the contents were sodium hydroxide (NaOH). The size of the microcapsules was about 400 to 500µm. The patterns were measured for resistances by means of the dual point measurement after spreading the microcapsules before breaking them (see Table 2). It was observed that some samples showed a slight increase in resistance, which was probably caused by the fact that the contents of some microcapsules had leaked out and, thus, slightly changed the conductivity of the line.

The microcapsules, which had been spread, were ruptured and the NaOH contained in them was released by means of mechanical force. In this case, a relatively great mechanical force was used, as the coat layer of the microcapsules used was quite thick. By changing the thickness and the material of the layer, it is possible to adjust the sensitivity to break. The resistance between the measuring points was measured 4 hours after rupturing the microcapsules (see Table 2), as both the dedoping effect and the spreading of the dedoping agent requires a certain time of action before the effect is visible in the resistance test.

**Table 2. Measured resistances of the patterns**

| No. of sample | Base board and coating | Width of line mm] | 1. measurement [Ω] | 2. measurement [Ω] | 3. measurement [Ω] |
|---|---|---|---|---|---|
| 1 | Simcote | 1 | Max | - | - |
| 2 | Simcote | 2 | (33 ± 1) E6 | (33 ± 1) E6 | Max |
| 3 | Simcote | 4 | (22 ± 1) E6 | (24 ± 1) E6 | Max |
| 4 | Simcote | 6 | (18 ± 1) E6 | (19 ± 1) E6 | (20 ± 1) E6 |
| 5 | Simcote | 8 | (13 ± 1) E6 | (13 ± 1) E6 | (13 ± 1) E6 |
| 6 | Avanta Ultra | 1 | (3.7 ± 0.1) E6 | (3.9 ± 0.1) E6 | Max |
| 7 | Avanta Ultra | 2 | (880 ± 10) E3 | (890 ± 10) E6 | (27 ± 1) E6 |
| 8 | Avanta Ultra | 4 | (340 ± 10) E3 | (330 ± 10) E3 | (900 ± 10) E3 |
| 9 | Avanta Ultra | 6 | (230 ± 10) E3 | (200 ± 10) E3 | (300 ± 10) E3 |
| 10 | Avanta Ultra | 8 | (180 ± 10) E3 | (150 ± 10) E3 | (200 ± 10) E3 |

By examining Table 2, it can be observed that the resistances of Samples 2, 3, 6, 7 and 8 showed a significant increase after rupturing the microcapsules. Thus, the most functional structure for a structure that measures the mechanical force is one, wherein the width of the sensor area changing its conductivity is fairly small and, thus, the gradient of the change is the greatest. Furthermore, it is preferable for the sensor to have a thick, i.e., a well-conducting line. This can be observed when comparing Samples 1 and 6.

No effect could be observed on the greatest line widths (Samples 4, 5, 9 and 10). This is probably because the NaOH contained in the microcapsules, because of its small volume, is not spread extensively and, therefore, it is easy for the wide line to keep its conductivity.

## Claims

1. A sensor structure, comprising
- at least one first layer having an electrically conductive polymer optionally mixed with a binder that forms a binding agent matrix, and
- at least one second layer, which is apart from and next to the first layer or at a distance therefrom, or at least partly joined with the first layer,
whereby the second layer comprises microcapsules that either contain an acidic substance selected from sulphonic acids, or a basic substance selected from sodium hydroxide, potassium hydroxide and sodium carbonate, optionally mixed with the binder, the acidic or basic substance changing the electrical conductivity of the polymer when released from the microcapsules.

2. The sensor structure according to Claim 1, **characterized in** either being part of a paper or cardboard product or being attached on top of the surface of the paper or cardboard product.

3. The sensor structure according to Claim 1 or 2, **characterized in that** the diameter of the microcapsules is from 1 to 500µm, preferably from 1 to 10µm.

4. The sensor structure according to any of the preceding claims, **characterized in that** the filling ratio of the microcapsules is from about 20 to 95%, more preferably from about 50 to 95%.

5. The sensor structure according to any of the preceding claims, **characterized in that** the coat material of the microcapsules can be ruptured by means of mechanical force, radiation, heat or more than one of these.

6. The sensor structure according to Claim 5, **characterized in that** the coat material is protein, polysaccharide, starch, wax, fat, natural or synthetic polymer or resin, preferably melamine formaldehyde.

7. The sensor structure according to Claim 1, **characterized in that** the electrically conductive polymer is polyaniline, polypyrrole, polyacetylene, polyparaphenylene or polythiophene or a derivative or mixture thereof.

8. The sensor structure according to Claim 7, **characterized in that**, in addition to the electrically conductive polymer, other electrically conductive particles, such as metal or graphite, are used.

9. The sensor structure according to Claim 1, **characterized in that** the binder is a starch-based binder, dextrine, carboxymethyl cellulose, or a polymer-based binder, such as polyvinyl alcohol or polyvinyl acetate.

10. The sensor structure according to Claim 1 or 9, **characterized in that** the amount of binder is from about 0.1 to 10 g/m², typically from about 0.5 to 5 g/m², preferably from about 1 to 3.5 g/m².

11. The sensor structure according to any of Claims 1, 9 or 10, **characterized in that** the content of the electrically conductive polymer in the layer formed by the polymer and the binder is from about 10 to 90% by weight, typically from about 30 to 70% by weight.

12. The sensor structure according to any of the preceding claims, **characterized in that**, in the area to which the acidic microcapsules have been added, the pH in the product after the rupture of the microcapsules is from about 2 to 6, preferably from about 2 to 4.

13. The sensor structure according to any of the preceding claims, **characterized in that** the thickness of the layer formed by the microcapsules in the product is from 1µm to 1mm, preferably from 1 to 50µm.

14. The sensor structure according to any of the preceding claims, **characterized in that** the surface resistivity of the polymer layer in its electrically conductive form is from about 10² to 10¹¹ ohm, preferably from about 10² to 10⁸ ohm.

15. The sensor structure according to any of the preceding claims, **characterized in that** there is an intermediate layer between the polymer layer and the layer of microcapsules, improving the mutual attachment of the layers and consisting of a binder that is the same as or different from that in the polymer layer or the layer of microcapsules.

16. The sensor structure according to any of the preceding claims, **characterized in that** the substance that fills the microcapsules is liquid.

17. The sensor structure according to any of the preceding claims, **characterized in that** the filling agent of the microcapsules comprises an acidic or basic dye, such as a dye that reacts with the bentonite in paper, or a precursor of the dye.

18. The sensor structure according to any of the preceding claims, **characterized in that** the filling agent of the microcapsules is used as a solution of about 0.01 to 10 M.

19. The sensor structure according to any of the preceding claims, **characterized in that** the rupturing methods of the microcapsules used comprise mechanical force, radiation, heat treatment, chemical degradation, biodegradation, sensitivity to salt, pressure sensitivity, photochemical degradation, sensitivity to the pH range, and dissolving in solvents.

20. The sensor structure according to any of the preceding claims, **characterized in that** the microcapsules in the sensor rupture when exposed to the substance indicated by the sensor.

21. The sensor structure according to any of the preceding claims, **characterized in that** the sensor is an opening indicator, temperature indicator, rupture/pressure indicator, light detector or solvent sensor.

22. The sensor structure according to any of the preceding claims, **characterized in that** there is a bulking agent around the microcapsules.

23. The sensor structure according to any of the preceding claims, **characterized in that** the changed colour of the polymer can be verified by the naked eye or by means of an optical device.

24. The sensor structure according to any of the preceding claims, **characterized in that** the changed electrical conductivity of the polymer can be verified by a non-contacting or contacting conductivity measurement, galvanic, capacitive or inductive methods, or some other measuring method of electrical conductivity.

25. Use of a sensor structure according to any of Claims 1 to 24 to measure the internal conditions of a product package.

26. Use of a sensor structure according to any of Claims 1 to 24 to measure the outer conditions of a product package.

27. A method for manufacturing a sensor structure, comprising the forming of, according to the method,
- at least one layer containing an electrically conductive polymer, which is optionally mixed with a binder, and
- at least one second layer, which is adapted to be separate from and adjacent to the first layer or at a distance therefrom or at least partly connected to the first layer,
whereby the second layer is formed from microcapsules, optionally mixed with the binder, the microcapsules containing a base selected from sodium hydroxide, potassium hydroxide and sodium carbonate, or an acid selected from sulphonic acids.

28. A method for manufacturing a product containing a sensor structure,
wherein
- an electrically conductive polymer (3) is added to the product in at least one layer, optionally mixed with a binder; and
- microcapsules (2) containing basic substances selected from sodium hydroxide, potassium hydroxide and sodium carbonate, or acidic substances selected from sulphonic acids, are added to the product in at least one second layer, optionally mixed with the binder.

29. The method according to Claim 27 or 28, **characterized in that** the microcapsules are attached on top of the layer containing the electrically conductive polymer by using a binding agent, which can be a sticker, tape or another film or a corresponding material having an adhesive provided on its surface.

30. The method according to Claim 28, **characterized in that** the microcapsules are added to the product at the production, further treatment or refining stages.

31. The method according to Claim 28 or 30, **characterized in that** the rupturing of the microcapsules added to the product can be observed as a change in the electrical conductivity of the electrically conductive polymer.

32. The method according to any of claims 27 to 31, **characterized in that** the electrically conductive polymer can be dedoped by means of the basic substance released from the microcapsules.

33. The method according to any of claims 27 to 31, **characterized in that** the electrically conductive polymer can be doped by means of the acidic substance released from the microcapsules.

34. The method according to any of claims 27 to 33, **characterized in that** the microcapsules are added to the product or the sensor structure mixed with the polymer.

35. The method according to any of claims 27 to 33, **characterized in that** the microcapsules are added to the product or the sensor structure in a different layer from the polymer.

36. The method according to Claim 35, **characterized in that** the layer of microcapsules and the polymer layer are kept separate at least during the production stage and are not brought tightly together until at the further processing or refining stages or at a later stage in order to provide a reaction between the substances released from the microcapsules and the electrically conductive polymer, or the sensor is activated for a later reaction.

37. The method according to any of claims 27 to 36, **characterized in that** the microcapsules can be ruptured by using mechanical force, radiation, heat treatment, chemical degradation, biodegradation, sensitivity to salt, pressure sensitivity, photochemical degradation, sensitivity to the pH range, or dissolving in solvents.

38. A paper or cardboard product, **characterized in that** it contains a sensor structure according to any of Claims 1 to 26.

## Patentansprüche

1. Eine Sensorstruktur, umfassend:
- mindestens eine erste Schicht, die ein elektrisch leitfähiges Polymer umfasst, das wahlweise mit einem Bindemittel gemischt ist, das eine Bindemittel-Matrix ausbildet, und
- mindestens eine zweite Schicht, die von der ersten Schicht getrennt und neben der ersten Schicht oder in einem Abstand davon ist oder zumindest teilweise mit der ersten Schicht zusammengefügt ist,
wobei die zweite Schicht Mikrokapseln umfasst, die entweder eine aus Sulfonsäuren ausgewählte saure Substanz oder eine aus Natriumhydroxid, Kaliumhydroxid und Natriumkarbonat ausgewählte basische Substanz enthalten, wahlweise mit dem Bindemittel gemischt, wobei die saure oder die basische Substanz die elektrischer Leitfähigkeit das Polymers verändern, wenn sie aus den Mikrokapseln freigesetzt werden.

2. Die Sensorstruktur gemäß Anspruch 1, **dadurch gekennzeichnet, dass** sie entweder Teil eines Papier- oder Kartonproduktes ist oder an der Oberseite der Fläche des Papier- oder Kartonproduktes angebracht ist.

3. Die Sensorstruktur gemäß Anspruch 1 oder 2, **dadurch gekennzeichnet, dass** der Durchmesser der Mikrokapseln 1 µm bis 500 µm, vorzugsweise 1 µm bis 10 µm beträgt.

4. Die Sensorstruktur gemäß einem der vorhergehenden Ansprüche, **dadurch gekennzeichnet, dass** das Füllverhältnis der Mikrokapseln 20% bis 95%, bevorzugter ungefähr 50% bis 95% beträgt.

5. Die Sensorstruktur gemäß einem der vorhergehenden Ansprüche, **dadurch gekennzeichnet, dass** das Ummantelungsmaterial der Mikrokapseln mittels mechanischer Kraft, Bestrahlung, Wärme oder mehr als einem davon aufgebrochen werden kann.

6. Die Sensorstruktur gemäß Anspruch 5, **dadurch gekennzeichnet, dass** das Ummantelungsmaterial Protein, Polysaccharid, Stärke, Wachs, Fett, natürliches oder synthetisches Polymer oder Harz, vorzugsweise Melaminformaldehyd ist.

7. Die Sensorstruktur gemäß Anspruch 1, **dadurch gekennzeichnet, dass** das elektrisch leitfähige Polymer Polyanilin, Polypyrrol, Polyacetylen, Polyparaphenylen oder Polythiophen oder ein Derivat oder eine Mischung davon ist.

8. Die Sensorstruktur gemäß Anspruch 7, **dadurch gekennzeichnet, dass** zusätzlich zu dem elektrisch leitfähigen Polymer andere elektrisch leitfähige Teilchen, zum Beispiel Metall oder Graphit verwendet werden.

9. Die Sensorstruktur gemäß Anspruch 1, **dadurch gekennzeichnet, dass** das Bindemittel ein stärkebasiertes Bindemittel, Dextrin, Carboxymethylzellulose oder ein polymerbasiertes Bindemittel, zum Beispiel Polyvinylalkohol oder Polyvinylacetat ist.

10. Die Sensorstruktur gemäß Anspruch 1 oder 9, **dadurch gekennzeichnet, dass** die Menge an Bindemittel von ungefähr 0,1 bis 10 g/m², typischerweise von 0,5 bis 5 g/m², vorzugsweise von ungefähr 1 bis 3,5 g/m² beträgt.

11. Die Sensorstruktur gemäß einem der Ansprüche 1, 9 oder 10, **dadurch gekennzeichnet, dass** der Gehalt an elektrisch leitfähigem Polymer in der durch das Polymer und das Bindemittel ausgebildeten Schicht ungefähr 10 bis 90 Gew.-%, typischerweise ungefähr 30 bis 70 Gew.-% beträgt.

12. Die Sensorstruktur gemäß einem der vorhergehenden Ansprüche, **dadurch gekennzeichnet, dass** in dem Bereich, dem die sauren Mikrokapseln beigefügt wurden, der pH-Wert in dem Produkt nach dem Aufbrechen der Mikrokapseln ungefähr 2 bis 6, vorzugsweise ungefähr 2 bis 4 beträgt.

13. Die Sensorstruktur gemäß einem der vorhergehenden Ansprüche, **dadurch gekennzeichnet, dass** die Dicke der durch die Mikrokapseln gebildeten Schicht in dem Produkt 1 µm bis 1 mm, vorzugsweise 1 µm bis 50 µm beträgt.

14. Die Sensorstruktur gemäß einem der vorhergehenden Ansprüche, **dadurch gekennzeichnet, dass** der Flächenwiderstand der Polymerschicht in ihrer elektrisch leitfähigen Form ungefähr 10² bis 10¹¹ Ohm, vorzugsweise ungefähr 10² bis 10⁸ Ohm beträgt.

15. Die Sensorstruktur gemäß einem der vorhergehenden Ansprüche, **dadurch gekennzeichnet, dass** zwischen der Polymerschicht und der Mikrokapselschicht eine Zwischenschicht liegt, die die gegenseitige Bindung der Schichten verbessert und aus einem Bindemittel besteht, das das gleiche wie das in der Polymerschicht oder der Mikrokapselschicht ist oder sich von diesem unterscheidet.

16. Die Sensorstruktur gemäß einem der vorhergehenden Ansprüche, **dadurch gekennzeichnet, dass** die Substanz, die die Mikrokapseln füllt, flüssig ist.

17. Die Sensorstruktur gemäß einem der vorhergehenden Ansprüche, **dadurch gekennzeichnet, dass** die Füllmasse der Mikrokapseln einen sauren oder basischen Farbstoff, zum Beispiel einen Farbstoff, der mit dem Bentonit in Papier reagiert, oder eine Vorstufe des Farbstoffes umfasst.

18. Die Sensorstruktur gemäß einem der vorhergehenden Ansprüche, **dadurch gekennzeichnet, dass** die Füllmasse der Mikrokapseln als eine Lösung von ungefähr 0,01 bis 10 M verwendet wird.

19. Die Sensorstruktur gemäß einem der vorhergehenden Ansprüche, **dadurch gekennzeichnet, dass** die Aufbrechverfahren für die Mikrokapseln mechanische Kraft, Bestrahlung, Wärmebehandlung, chemischen Abbau, biologischen Abbau, Empfindlichkeit gegenüber Salz, Druckempfindlichkeit, photochemischen Abbau, Empfindlichkeit gegenüber dem pH-Bereich und Auflösen in Lösungsmitteln umfassen.

20. Die Sensorstruktur gemäß einem der vorhergehenden Ansprüche, **dadurch gekennzeichnet, dass** die Mikrokapseln im Sensor aufbrechen, wenn sie der durch den Sensor angezeigten Substanz ausgesetzt werden.

21. Die Sensorstruktur gemäß einem der vorhergehenden Ansprüche, **dadurch gekennzeichnet, dass** der Sensor ein Öffnungsanzeiger, ein Temperaturanzeiger, ein Aufbrech-/Druck-Anzeiger, ein Lichtdetektor oder ein Lösungsmittelsensor ist.

22. Die Sensorstruktur gemäß einem der vorhergehenden Ansprüche, **dadurch gekennzeichnet, dass** um die Mikrokapseln herum ein Füllstoff vorgesehen ist.

23. Die Sensorstruktur gemäß einem der vorhergehenden Ansprüche, **dadurch gekennzeichnet, dass** die veränderte Farbe des Polymers mit dem bloßen Auge oder mittels einer optischen Vorrichtung verifiziert werden kann.

24. Die Sensorstruktur gemäß einem der vorhergehenden Ansprüche, **dadurch gekennzeichnet, dass** die veränderte elektrische Leitfähigkeit des Polymers durch eine nichtkontaktierende oder kontaktierende Leitfähigkeitsmessung, galvanische, kapazitive oder induktive Verfahren oder ein anderes Verfahren zum Messen von elektrischer Leitfähigkeit verifiziert werden kann.

25. Verwendung einer Sensorstruktur gemäß einem der Ansprüche 1 bis 24 zum Messen der internen Bedingungen einer Produktverpackung.

26. Verwendung einer Sensorstruktur gemäß einem der Ansprüche 1 bis 24 zum Messen der äußeren Bedingungen einer Produktverpackung.

27. Ein Verfahren zum Herstellen einer Sensorstruktur, umfassend das Ausbilden, gemäß dem Verfahren, von:
- mindestens einer Schicht, die ein elektrisch leitfähiges Polymer enthält, das wahlweise mit einem Bindemittel vermischt ist, und
- mindestens einer zweiten Schicht, die angepasst ist, um von der ersten Schicht getrennt und benachbart zu dieser oder in einem Abstand davon oder zumindest teilweise mit der ersten Schicht verbunden zu sein,
wobei die zweite Schicht aus Mikrokapseln gebildet wird, die wahlweise mit dem Bindemittel vermischt werden, wobei die Mikrokapseln eine aus Natriumhydroxid, Kaliumhydroxid und Natriumkarbonat ausgewählte Base oder eine aus Sulfonsäuren ausgewählte Säure enthalten.

28. Ein Verfahren zum Herstellen eines Produktes, das eine Sensorstruktur enthält, wobei:
- ein elektrisch leitfähiges Polymer (3) dem Produkt in mindestens einer Schicht zugefügt wird, wahlweise mit einem Bindemittel vermischt, und
- Mikrokapseln (2), die aus Natriumhydroxid, Kaliumhydroxid und Natriumkarbonat ausgewählte basische Substanzen oder aus Sulfonsäuren ausgewählte saure Substanzen enthalten, dem Produkt in der mindestens einen zweiten Schicht beigefügt werden, wahlweise mit dem Bindemittel vermischt.

29. Das Verfahren gemäß Anspruch 27 oder 28, **dadurch gekennzeichnet, dass** die Mikrokapseln an der Oberseite der Schicht, die das elektrisch leitfähige Polymer enthält, mittels eines Bindemittels angebracht werden, das ein Aufkleber, Klebeband oder ein an seiner Oberfläche mit einem Klebstoff versehenes korrespondierendes Material sein kann.

30. Das Verfahren gemäß Anspruch 28, **dadurch gekennzeichnet, dass** die Mikrokapseln dem Produkt in der Produktions-, der weiteren Behandlungs- oder der Verfeinerungsstufe zugefügt werden.

31. Das Verfahren gemäß Anspruch 28 oder 30, **dadurch gekennzeichnet, dass** das Aufbrechen der dem Produkt beigefügten Mikrokapseln als eine Veränderung der elektrischen Leitfähigkeit des elektrisch leitfähigen Polymers beobachtet werden kann.

32. Das Verfahren gemäß einem der Ansprüche 27 bis 31, **dadurch gekennzeichnet, dass** das elektrisch leitfähige Polymer mittels der aus den Mikrokapseln freigesetzten basischen Substanz entdotiert werden kann.

33. Das Verfahren gemäß einem der Ansprüche 27 bis 31, **dadurch gekennzeichnet, dass** das leitfähige Polymer mittels der aus den Mikrokapseln freigesetzten sauren Substanz dotiert werden kann.

34. Das Verfahren gemäß einem der Ansprüche 27 bis 33, **dadurch gekennzeichnet, dass** die Mikrokapseln dem Produkt oder der Sensorstruktur mit dem Polymer vermischt beigefügt werden.

35. Das Verfahren gemäß einem der Ansprüche 27 bis 33, **dadurch gekennzeichnet, dass** die Mikrokapseln dem Produkt oder der Sensorstruktur in einer sich von dem Polymer unterscheidenden Schicht beigefügt werden.

36. Das Verfahren gemäß Anspruch 35, **dadurch gekennzeichnet, dass** die Mikrokapselschicht und die Polymerschicht zumindest während der Produktionsstufe getrennt gehalten werden und erst in der weiteren Verarbeitungsstufe oder der Verfeinerungsstufe oder zu einem späteren Zeitpunkt eng zusammengebracht werden, um eine Reaktion zwischen den aus den Mikrokapseln freigesetzten Substanzen und dem elektrisch leitfähigen Polymer bereitzustellen, oder dass der Sensor für eine spätere Reaktion aktiviert wird.

37. Das Verfahren gemäß einem der Ansprüche 27 bis 36, **dadurch gekennzeichnet, dass** die Mikrokapseln mittels mechanischer Kraft, Bestrahlung, Wärmebehandlung, chemischen Abbaus, biologischen Abbaus, Empfindlichkeit gegenüber Salz, Druckempfindlichkeit, photochemischen Abbaus, Empfindlichkeit gegenüber dem pH-Bereich oder Auflösens in Lösungsmitteln aufgebrochen werden können.

38. Ein Papier- oder Kartonprodukt, **dadurch gekennzeichnet, dass** es eine Sensorstruktur gemäß einem der Ansprüche 1 bis 26 enthält.

## Revendications

1. Structure de capteur, comprenant
- au moins une première couche ayant un polymère électriquement conducteur facultativement mélangé à un liant qui forme une matrice d'agent liant, et
- au moins une seconde couche, qui est séparée de et à côté de la première couche ou à une distance de cette dernière, ou au moins partiellement jointe à la première couche,
dans laquelle la seconde couche comprend des microcapsules qui contiennent soit une substance acide choisie parmi les acides sulfoniques, soit une substance basique choisie parmi l'hydroxyde de sodium, l'hydroxyde de potassium et le carbonate de sodium, facultativement mélangé avec le liant, la substance acide ou basique changeant la conductivité électrique du polymère une fois libérée des microcapsules.

2. Structure de capteur selon la revendication 1, **caractérisée en ce que** soit elle fait partie d'un produit en papier ou en carton, soit elle est attachée sur le dessus de la surface du produit en papier ou en carton.

3. Structure de capteur selon la revendication 1 ou 2, **caractérisée en ce que** le diamètre des microcapsules est de 1 à 500 µm, de préférence de 1 à 10 µm.

4. Structure de capteur selon l'une quelconque des revendications précédentes, **caractérisée en ce que** le rapport de remplissage des microcapsules est d'environ 20 à 95 %, de manière davantage préférée d'environ 50 à 95 %.

5. Structure de capteur selon l'une quelconque des revendications précédentes, **caractérisée en ce que** le matériau de revêtement des microcapsules peut être rompu au moyen d'une force mécanique, d'un rayonnement, de chaleur, ou de plus d'un de ces derniers.

6. Structure de capteur selon la revendication 5, **caractérisée en ce que** le matériau de revêtement est une protéine, un polysaccharide, un amidon, une cire, une graisse, un polymère ou une résine naturelle ou synthétique, de préférence de la mélamine-formaldéhyde.

7. Structure de capteur selon la revendication 1, **caractérisée en ce que** le polymère électriquement conducteur est la poly(aniline), le poly(pyrrole), le poly(acétylène), le poly(paraphénylène) ou le poly(thiophène) ou un dérivé ou mélange de ces derniers.

8. Structure de capteur selon la revendication 7, **caractérisée en ce que**, en plus du polymère électriquement conducteur, d'autres particules électriquement conductrices, telles que du métal ou du graphite, sont utilisées.

9. Structure de capteur selon la revendication 1, **caractérisée en ce que** le liant est un liant à base d'amidon, la dextrine, la carboxyméthylcellulose, ou un liant à base de polymère, tel que le poly(alcool vinylique) ou le poly (acétate de vinyle).

10. Structure de capteur selon la revendication 1 ou 9, **caractérisée en ce que** la quantité de liant est d'environ 0,1 à 10 g/m², typiquement d'environ 0,5 à 5 g/m², de préférence d'environ 1 à 3,5 g/m².

11. Structure de capteur selon l'une quelconque des revendications 1, 9 ou 10, **caractérisée en ce que** la teneur du polymère électriquement conducteur dans la couche formée par le polymère et le liant est d'environ 10 à 90 % en poids, typiquement d'environ 30 à 70 % en poids.

12. Structure de capteur selon l'une quelconque des revendications précédentes, **caractérisée en ce que**, dans la zone à laquelle les microcapsules acides ont été ajoutées, le pH dans le produit après la rupture des microcapsules est d'environ 2 à environ 6, de préférence d'environ 2 à 4.

13. Structure de capteur selon l'une quelconque des revendications précédentes, **caractérisée en ce que** l'épaisseur de la couche formée par les microcapsules dans le produit mesure 1 µm à 1 mm, de préférence de 1 à 50 µm.

14. Structure de capteur selon l'une quelconque des revendications précédentes, **caractérisée en ce que** la résistivité de surface de la couche de polymère dans sa forme électriquement conductrice est d'environ 10² à 10¹¹ ohm, de préférence d'environ 10² à 10⁸ ohm.

15. Structure de capteur selon l'une quelconque des revendications précédentes, **caractérisée en ce qu'**il y a une couche intermédiaire entre la couche de polymère et la couche de microcapsules, améliorant l'attachement mutuel des couches et consistant en un liant qui est identique à ou différent de celui dans la couche de polymère ou la couche de microcapsules.

16. Structure de capteur selon l'une quelconque des revendications précédentes, **caractérisée en ce que** la substance qui remplit les microcapsules est liquide.

17. Structure de capteur selon l'une quelconque des revendications précédentes, **caractérisée en ce que** l'agent de remplissage des microcapsules comprend une teinte acide ou basique, tel qu'une teinte qui réagit avec la bentonite sur du papier, ou un précurseur de la teinte.

18. Structure de capteur selon l'une quelconque des revendications précédentes, **caractérisée en ce que** l'agent de remplissage des microcapsules est utilisé comme une solution d'environ 0,01 à 10 M.

19. Structure de capteur selon l'une quelconque des revendications précédentes, **caractérisée en ce que** les procédés de rupture des microcapsules utilisés comprennent la force mécanique, le rayonnement, le traitement thermique, la dégradation chimique, la biodégradation, la sensibilité au sel, la sensibilité à la pression, la dégradation photochimique, la sensibilité à la plage de pH et la dissolution dans des solvants.

20. Structure de capteur selon l'une quelconque des revendications précédentes, **caractérisée en ce que** les microcapsules dans le capteur se rompent quand elles sont exposées à la substance indiquée par le capteur.

21. Structure de capteur selon l'une quelconque des revendications précédentes, **caractérisée en ce que** capteur est un indicateur d'ouverture, un indicateur de température, un indicateur de pression/rupture, un détecteur de lumière ou un capteur de solvant.

22. Structure de capteur selon l'une quelconque des revendications précédentes, **caractérisée en ce qu'**il y a un agent de charge autour des microcapsules.

23. Structure de capteur selon l'une quelconque des revendications précédentes, **caractérisée en ce que** le changement de couleur du polymère peut être vérifié à l'oeil nu ou au moyen d'un dispositif optique.

24. Structure de capteur selon l'une quelconque des revendications précédentes, **caractérisée en ce que** le changement de conductivité électrique du polymère peut être vérifié par une mesure de conductivité sans contact direct ou à contact direct, des méthodes galvaniques, capacitive ou inductive, ou quelques autre méthode de mesure de la conductivité électrique.

25. Utilisation d'une structure de capteur selon l'une quelconque des revendications 1 à 24, afin de mesurer les conditions internes d'un emballage de produit.

26. Utilisation d'une structure de capteur selon l'une quelconque des revendications 1 à 24, afin de mesurer les conditions externes d'un emballage de produit.

27. Procédé de fabrication d'une structure de capteur, comprenant les étapes consistant à former, selon le procédé,
- au moins une couche contenant un polymère électriquement conducteur, qui est facultativement mélangée à un liant, et
- au moins une seconde couche, qui est adaptée pour se séparer de et être adjacente à la première couche ou à une distance de cette dernière ou au moins en partie raccordée à la première couche,
moyennant quoi la seconde couche est formée à partir de microcapsules, facultativement mélangées avec le liant, les microcapsules contenant une base choisie parmi l'hydroxyde de sodium, l'hydroxyde de potassium et le carbonate de sodium, ou un acide choisi parmi les acides sulfoniques.

28. Procédé de fabrication d'un produit contenant une structure de capteur, dans lequel
- un polymère électriquement conducteur (3) est ajouté au produit en au moins une couche, facultativement mélangé avec un liant ; et
- des microcapsules (2) contenant des substances basiques choisies parmi l'hydroxyde de sodium, l'hydroxyde de potassium et le carbonate de sodium, ou des substances acides choisies parmi les acides sulfoniques, sont ajoutées au produit en au moins une seconde couche, facultativement mélangée avec le liant.

29. Procédé selon la revendication 27 ou 28, **caractérisé en ce que** les microcapsules sont attachées sur le dessus de la couche contenant le polymère électriquement conducteur en utilisant un liant, qui peut être un autocollant, un bande ou un autre film ou un matériau correspondant ayant un adhésif disposé à sa surface.

30. Procédé selon la revendication 28, **caractérisé en ce que** les microcapsules sont ajoutées au produit aux étapes de production, traitement ultérieur ou affinage.

31. Procédé selon la revendication 28 ou 30, **caractérisé en ce que** la rupture des microcapsules ajoutées au produit peut être observée comme un changement dans la conductivité électrique du polymère électriquement conducteur.

32. Procédé selon l'une quelconque des revendications 27 à 31, **caractérisé en ce que** le polymère électriquement conducteur peut être dédopé au moyen de la substance basique libérée des microcapsules.

33. Procédé selon l'une quelconque des revendications 27 à 31, **caractérisé en ce que** le polymère électriquement conducteur peut être dopé au moyen de la substance acide libérée des microcapsules.

34. Procédé selon l'une quelconque des revendications 27 à 33, **caractérisé en ce que** les microcapsules sont ajoutées au produit ou à la structure de capteur mélangée avec le polymère.

35. Procédé selon l'une quelconque des revendications 27 à 33, **caractérisé en ce que** les microcapsules sont ajoutées au produit ou à la structure de capteur dans une couche différente du polymère.

36. Procédé selon la revendication 35, **caractérisé en ce que** la couche de microcapsules et la couche de polymère sont maintenues séparées au moins au stade de production et ne sont serrées ensemble qu'aux étapes suivantes de traitement ou d'affinage, ou à une étape ultérieure afin de provoquer une réaction entre les substances libérées des microcapsules et le polymère électriquement conducteur, ou bien le capteur est activé pour une réaction ultérieure.

37. Procédé selon l'une quelconque des revendications 27 à 36, **caractérisé en ce que** les microcapsules peuvent être rompues en utilisant une force mécanique, un rayonnement, un traitement thermique, une dégradation chimique, une biodégradation, une sensibilité au sel, une sensibilité à la pression, une dégradation photochimique, une sensibilité à la plage de pH, ou une dissolution dans des solvants.

38. Produit en papier ou en carton, **caractérisé en ce qu'**il contient une structure de capteur selon l'une quelconque des revendications 1 à 26.
